# EUROPÄISCHE PATENTSCHRIFT

(11) **EP 2 788 235 B1**
(45) Veröffentlichungstag und Bekanntmachung des Hinweises auf die Patenterteilung: **02.01.2019**
(21) Anmeldenummer: 12791754.0
(22) Anmeldetag: 27.11.2012
(51) Int. Cl.: B60T 10/02, F16D 57/04

(54) **ANTRIEBSSTRANG MIT ABKOPPELBAREM HYDRODYNAMISCHEN RETARDER UND STEUERUNGSVERFAHREN HIERFÜR**
DRIVELINE WITH DISCONNECTABLE HYDRODYNAMIC RETARDER AND -CONTROL METHOD
GROUPE MOTOPROPULSEUR AVEC RETARDATEUR HYDRODYNAMIQUE DÉCONNECTABLE ET PROCÉDÉ DE CONTRÔLE D'UN TEL RETARDATEUR

(30) Priorität: 09.12.2011 DE 102011120622
(43) Veröffentlichungstag der Anmeldung: 15.10.2014
(73) Patentinhaber: Voith Patent GmbH, 89522 Heidenheim (DE)
(72) Erfinder: MENNE, Achim, 74564 Crailsheim (DE); HUTH, Tilman, 74589 Satteldorf (DE); LAUKEMANN, Dieter, 74564 Crailsheim (DE); KOCH, Werner, 73326 Deggingen (DE); KLEMENT, Werner, 89520 Heidenheim (DE); BECKE, Martin, 89075 Ulm (DE)
(74) Vertreter: Dr. Weitzel & Partner
(86) Internationale Anmeldenummer: PCT/EP2012/073663
(87) Internationale Veröffentlichungsnummer: WO 2013/083427

(56) Entgegenhaltungen:
- EP-B1- 2 024 209
- DE-A1-102005 052 121
- GB-A- 1 272 020

## Beschreibung

Die vorliegende Erfindung betrifft einen Kraftfahrzeugantriebsstrang mit einem hydrodynamischen Retarder, der mittels einer Trennkupplung von seinem Antrieb abkoppelbar ist, sowie ein Verfahren zum Steuern des Ein- und Ausschaltens eines solchen hydrodynamischen Retarders.

Hydrodynamische Retarder werden seit vielen Jahren als verschleißfreie Dauerbremsen in Kraftfahrzeugen sowohl auf der Schiene als auch auf der Straße, letzteres insbesondere in Lastkraftwagen, eingesetzt. Obwohl solche verschleißfreien Dauerbremsen bezüglich der Sicherheit beim Bremsen des Fahrzeugs und bezüglich eines geringeren Verschleißes der reibend arbeitenden Betriebsbremsen unbestritten erhebliche Vorteile mit sich bringen, sind die Leerlaufverluste im Nichtbremsbetrieb des hydrodynamischen Retarders ein Kritikpunkt. So konnten diese Leerlaufverluste zwar durch Vorsehen von sogenannten Ventilationsblenden oder durch Vorsehen eines im Nichtbremsbetrieb vom Stator (Sekundärrad) abfahrenden Rotors (Primärrad) reduziert werden, besonders die letztere Maßnahme reicht dabei jedoch in der Regel nicht aus, um die Leerlaufverluste auf nahezu Null abzusenken.

Eine Möglichkeit, die Leerlaufverluste eines solchen hydrodynamischen Retarders auf Null abzusenken, besteht darin, den hydrodynamischen Retarder mittels einer Trennkupplung vom Antriebsstrang abkoppelbar zu gestalten. Hierbei ergeben sich jedoch die folgenden Nachteile: Zum einen addiert sich die Zeit zum Schließen der Trennkupplung auf die Zeit zum Befüllen des hydrodynamischen Retarders auf, was die Ansprechzeit zwischen der Aktivierungsanforderung für den hydrodynamischen Retarder und dem Zurverfügungstellen des geforderten Bremsmomentes durch den hydrodynamischen Retarder verlängert. Zum anderen kann die Trennkupplung, die insbesondere als Reibkupplung ausgebildet ist, durch die hohen Belastungen, insbesondere beim Einschalten des hydrodynamischen Retarders, zu einem frühzeitigeren Servicebedarf oder Austausch von Komponenten im Vergleich zu Antriebssträngen mit hydrodynamischen Retardern, die ohne Trennkupplung am Antriebsstrang angebunden sind, führen.

Die europäische Patentschrift EP 2 024 209 B1 schlägt zur Verkürzung der Ansprechzeit eines über eine Trennkupplung am Antriebsstrang angeschlossenen hydrodynamischen Retarders vor, die Trennkupplung immer dann, wenn kein Traktionsbetrieb des Kraftfahrzeugs vorliegt, präventiv zu schließen und den Retarder im entleerten Zustand anzukoppeln.

Die Offenlegungsschrift DE 199 27 397 A1 schlägt eine selbstverstärkende Reibkupplung zum Ankoppeln des hydrodynamischen Retarders vor, die ein Ankoppeln des hydrodynamischen Retarders auch im befüllten Zustand ermöglicht.

Die Offenlegungsschrift DE 10 2005 052 121 A1 schlägt ein Ausschalten eines hydrodynamischen Retarders durch Entleeren seines Arbeitsraumes und gleichzeitiges Loslassen des Stators, sodass dieser mit dem Rotor trudeln kann, vor.

Die Offenlegungsschrift DE 10 2009 001 146 A1 schlägt eine koaxiale Anordnung des Rotors des Retarders und des Rotors einer elektrischen Maschine vor, die gemeinsam über eine Trennkupplung, insbesondere unsynchronisierte Trennkupplung, vom Antriebsstrang abschaltbar sind.

Der vorliegenden Erfindung liegt die Aufgabe zugrunde, einen Kraftfahrzeugantriebsstrang mit einem mittels einer Trennkupplung mechanisch vom Antriebsstrang abkoppelbaren hydrodynamischen Retarder sowie ein Steuerungsverfahren hierfür anzugeben, mit welchen die oben dargestellten Nachteile reduziert oder vermieden werden können. Die erfindungsgemäße Lösung soll sich durch eine einfache konstruktive und kostengünstige Bereitstellung auszeichnen.

Die erfindungsgemäße Aufgabe wird durch einen Kraftfahrzeugantriebsstrang mit einem hydrodynamischen Retarder mit den Merkmalen von Anspruch 1 sowie ein Verfahren zum Steuern des Ein- und Ausschaltens eines hydrodynamischen Retarders in einem Kraftfahrzeugantriebsstrang mit den Merkmalen von Anspruch 6 gelöst. Die abhängigen Ansprüche beschreiben vorteilhafte und besonders zweckmäßige Ausgestaltungen der Erfindung.

Ein erfindungsgemäßer hydrodynamischer Retarder, der erfindungsgemäß Bestandteil eines Kraftfahrzeugantriebsstrangs, insbesondere eines Schienenfahrzeugs oder Straßenfahrzeugs, bei Letzterem insbesondere eines Lastkraftwagens, ist, weist, wie üblich, einen Rotor und einen Stator auf. Der Rotor ist über einen Antrieb in Umlauf versetzbar. Der Stator ist ortsfest oder, im Fall eines sogenannten Gegenlaufretarders, entgegen der Drehrichtung des Rotors in Umlauf versetzbar, wird vorliegend dennoch als Stator bezeichnet. Sowohl der Rotor als auch der Stator umfassen beschaufelte Räder, die miteinander einen mit Arbeitsmedium befüllbaren Arbeitsraum ausbilden, damit sich durch Antreiben des Rotors (und gegebenenfalls gegensinniges Antreiben des Stators) eine hydrodynamische Kreislaufströmung in dem Arbeitsraum ausbildet, um Drehmoment vom Rotor auf den Stator zu übertragen und dadurch den Rotor abzubremsen.

Um den Rotor in Umlauf zu versetzen, ist dieser mit einem Antrieb verbunden. In dem Antrieb ist eine Trennkupplung vorgesehen, sodass der Rotor im Nicht-Bremsbetrieb beziehungsweise beim Ausschalten des Retarders vom Antrieb abkoppelbar ist und damit stillgesetzt werden kann. Durch Schließen der Trennkupplung wird der Rotor wieder in Umlauf versetzt. Die Trennkupplung umfasst demnach eine angetriebene Primärseite, die somit dem Antrieb zugeordnet ist, und eine dem Rotor zugeordnete Sekundärseite. Die Trennkupplung ist als Schlupfkupplung ausgeführt, das heißt beim Schließen derselben wird der Schlupf zwischen der Primärseite und der Sekundärseite nach und nach überbrückt, sodass der Drehzahlunterschied zwischen der Primärseite und der Sekundärseite abnimmt.

Erfindungsgemäß ist eine Steuervorrichtung vorgesehen, welche das Öffnen und Schließen der Trennkupplung zum Ein- und Ausschalten des Retarders steuert.

Gemäß einer ersten Ausführungsform der Erfindung wird, um eine unerwünschte Belastung oder Überlastung der Trennkupplung im reibenden Zustand beziehungsweise bei der Schlupfüberbrückung zu vermeiden, beispielsweise weil der Arbeitsraum des hydrodynamischen Retarders unerwünscht mit Arbeitsmedium befüllt ist oder weil der Füllungsgrad des Arbeitsraums über einem gewünschten Ausmaß liegt, mittels der Steuervorrichtung beim Schließen der Trennkupplung das Hochlaufverhalten der Sekundärseite der Trennkupplung und/oder des Rotors des Retarders erfasst, da hieraus unmittelbar auf den Füllungszustand geschlossen werden kann. Die Erfassung kann entweder über einen der Steuervorrichtung zugeordneten Sensor erfolgen oder das Hochlaufverhalten wird durch die Steuervorrichtung aus wenigstens einer ihr zugeleiteten Eingangsgröße bestimmt, die das Hochlaufverhalten beschreibt. In Abhängigkeit dieses aktuellen Hochlaufverhaltens der Sekundärseite der Trennkupplung beziehungsweise des Rotors des hydrodynamischen Retarders steuert die Steuervorrichtung entweder ein fortgesetztes Schließen der Trennkupplung zur (weiteren) Schlupfüberbrückung zwischen der Primärseite und der Sekundärseite und damit zur weiteren Beschleunigung des Rotors an oder sie bewirkt ein Abbrechen des Schließvorgangs der Trennkupplung, nämlich dann, wenn das Hochlaufverhalten nicht dem gewünschten oder erwarteten Zustand entspricht.

Damit kann durch das Abbrechen des Schließvorgangs bei einem unerwünschten Hochlaufverhalten eine ungünstige Belastung oder Überlastung der Trennkupplung vermieden werden, wohingegen bei einem erfassten Hochlaufverhalten, das dem gewünschten Befüllungszustand beziehungsweise einem entleerten Arbeitsraum des Retarders entspricht, der Schließvorgang der Trennkupplung fortgesetzt werden kann.

Gemäß einer zweiten erfindungsgemäßen Ausführungsform kann die Befüllung des Arbeitsraumes mit Arbeitsmedium in Abhängigkeit des erfassten Hochlaufverhaltens schneller oder langsamer erfolgen, um so die unerwünschte Belastung oder Überlastung der Trennkupplung zu vermeiden.

Zur Bewertung beziehungsweise Erfassung des aktuellen Hochlaufverhaltens der Sekundärseite der Trennkupplung und/oder des Rotors, wobei hierbei jedes beliebige Element zwischen der Trennkupplung und dem Rotor hinsichtlich seines Hochlaufverhaltens herangezogen werden kann beziehungsweise durch die Formulierung erfasst sein soll, eignen sich beispielsweise eine oder mehrere der folgenden Größen:
- die aktuelle Beschleunigung der Sekundärseite der Trennkupplung und/oder des Rotors (wobei hier das zuvor Gesagte gilt);
- der aktuelle Bremsmomentanstieg des Retarders;
- die Drehzahl der Sekundärseite der Trennkupplung und/oder des Rotors oder das Drehmoment des Retarders nach einer vorbestimmten Zeitspanne nach Beginn des Schließens der Trennkupplung;
- der Verdrehwinkel der Sekundärseite und/oder des Rotors gegenüber einer Winkelstellung zu Beginn des Schließens der Trennkupplung nach einer vorbestimmten Zeitspanne nach Beginn des Schließens der Trennkupplung;
- bei einem hydrodynamischen Retarder, dessen Rotor beim Übergang vom Bremsbetrieb zum Nicht-Bremsbetrieb vom Stator in Axialrichtung abfahrbar ist, die Axialbeschleunigung des Rotors, oder auch nach Ablauf einer vorbestimmten Zeitspanne nach Beginn des Schließens der Trennkupplung die Axialposition des Rotors.

Da das Bremsmoment des hydrodynamischen Retarders stark von der Drehzahl des Rotors des hydrodynamischen Retarders abhängt, ist es günstig, wenn die Entscheidung, ob der Schließvorgang der Trennkupplung fortgesetzt oder abgebrochen werden soll, auch in Abhängigkeit der Drehzahl der Primärseite der Trennkupplung oder einer hierzu korrelierenden Größe getroffen wird beziehungsweise von der Steuervorrichtung angesteuert wird.

Gemäß einer erfindungsgemäßen Ausführungsform kann in der Steuervorrichtung wenigstens ein Grenzwert, eine Kennlinie oder ein Kennfeld hinterlegt sein, der/die zur Entscheidung über die Fortsetzung des Schließvorgangs der Trennkupplung beziehungsweise den Abbruch des Schließvorgangs herangezogen wird. Selbstverständlich ist es auch möglich, eine solche Kennlinie beziehungsweise Grenzwert oder Kennfeld in einem anderen Speicher als dem der Steuervorrichtung zu hinterlegen. Die Größe, welche das aktuelle Hochlaufverhalten der Sekundärseite der Trennkupplung beziehungsweise des Rotors des Retarders beschreibt, und welche vorteilhaft durch das Signal des Sensors oder die der Steuervorrichtung zugeleiteten Eingangsgröße dargestellt wird, wird mit der Kennlinie, dem Grenzwert oder dem Kennfeld verglichen, insbesondere durch ein in der Steuervorrichtung hinterlegtes Computerprogramm, und in Abhängigkeit des Ergebnisses dieses Vergleichs erfolgt entweder das fortgesetzte Schließen der Trennkupplung oder das Abbrechen des Schließvorgangs.

Wenn die Geschwindigkeit der Befüllung des Arbeitsraumes in Abhängigkeit des erfassten Hochlaufverhaltens eingestellt wird, wobei die Befüllung des Arbeitsraumes zeitgleich mit oder um eine vorgegebene Zeitspanne früher oder um eine vorgegebene Zeitspanne später als das Schließen der Trennkupplung beginnt, so ist es günstig, wenn bei einem erfassten zu langsamen Hochlaufverhalten die Befüllgeschwindigkeit vergleichsweise gering eingestellt wird oder reduziert wird, wohingegen bei einem Hochlaufverhalten, das auf ein schnelleres Hochlaufen als erwartet hinweist, die Befüllgeschwindigkeit beibehalten werden kann oder erhöht werden kann.

Die Einstellung der Befüllgeschwindigkeit kann insbesondere in Abhängigkeit eines Vergleichs mit einem Soll-Gradienten erfolgen, der das Hochlaufverhalten beschreibt, beispielsweise einem Gradienten der Drehzahl des Rotors oder des Drehmoments des Retarders oder bei einem axial verschiebbaren Rotor der Axialgeschwindigkeit des Rotors.

Die Erfindung soll nachfolgernd anhand eines Ausführungsbeispiels exemplarisch beschrieben werden.

Es zeigt:

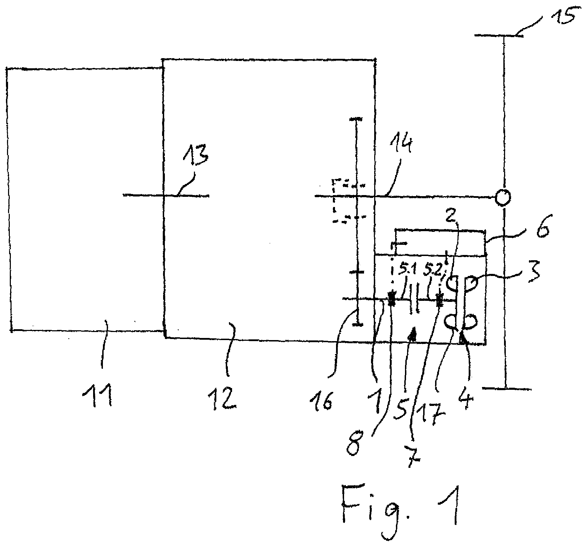

- Figur 1: einen Kraftfahrzeugantriebsstrang mit einem erfindungsgemäß angesteuerten über eine Trennkupplung abschaltbaren hydrodynamischen Retarder.

In der Figur 1 ist sehr schematisch ein Kraftfahrzeugantriebsstrang mit einem Verbrennungsmotor 11 und einem diesem nachgeordneten Getriebe 12, beispielweise Automatgetriebe oder automatisiertes Schaltgetriebe oder Handschaltgetriebe, dargestellt, wobei das Getriebe 12 eine Getriebeeingangswelle 13 sowie eine Getriebeausgangswelle 14 aufweist. Über die Getriebeausgangswelle 14 werden Antriebsräder 15 des Kraftfahrzeugs angetrieben.

Auf einem sogenannten Nebenabtrieb 16 des Getriebes 12 ist sekundärseitig ein hydrodynamischer Retarder 17 positioniert. Der Nebenabtrieb 16 stellt somit den Antrieb 1 des hydrodynamischen Retarders 17 dar. Jedoch könnte der hydrodynamische Retarder 17 auch an einer anderen Position, beispielsweise innerhalb des Getriebes 12, auf der Primärseite des Getriebes 12 oder an dem Verbrennungsmotor 11 primärseitig oder sekundärseitig oder auf einem Nebenabtrieb desselben vorgesehen sein.

Der hydrodynamische Retarder 17 weist einen Rotor 2 und einen Stator 3 auf, die gemeinsam den Arbeitsraum 4 ausbilden. Der Rotor 2 ist über eine Trennkupplung 5 am Antrieb 1 angeschlossen. Die Trennkupplung 5 weist eine Primärseite 5.1 und eine Sekundärseite 5.2 auf, sodass zum Einschalten des Retarders 17 die Trennkupplung 5 geschlossen wird, bis nach einer Schlupfüberbrückung die Sekundärseite 5.2 mit der Drehzahl der Primärseite 5.1 umläuft, und zum Ausschalten des Retarders 17 die Trennkupplung 5 wieder geöffnet wird.

Die Drehzahl der Sekundärseite 5.2 beziehungsweise des Rotors 2 der hydrodynamischen Kupplung 17 kann beispielweise über den dargestellten Sensor 7 erfasst werden oder aus anderen bekannten Größen berechnet werden.

Dem hydrodynamischen Retarder 17 und/oder der Trennkupplung 5 ist eine Steuervorrichtung 6 zugeordnet, welche das Schließen der Trennkupplung 5 und das Befüllen des Arbeitsraumes 4 des hydrodynamischen Retarders 17 steuert. Hierbei greift die Steuervorrichtung 6 beispielsweise auf den Sensor 7 und gegebenenfalls auf einen weiteren Sensor 8 zurück, der die Drehzahl der Primärseite 5.1 der Trennkupplung 5 und damit des Antriebs 1 erfasst. Aus der Drehzahl der Sekundärseite 5.2 beziehungsweise des Rotors 2 beziehungsweise aus dem Gradienten derselben kann die Steuervorrichtung 6 das aktuelle Hochlaufverhalten der Sekundärseite 5.2 und des Rotors 2 des hydrodynamischen Retarders 17 beim Schließen der Trennkupplung 5 erfassen und bei Bedarf, wenn eine Schädigung oder ein unerwünschter Verschleiß der Trennkupplung 5 droht, diesen Schließvorgang abbrechen. Hierbei kann die Steuervorrichtung 6 beispielsweise auch auf Signale des anderen Sensors 8 zurückgreifen, um die Schädigungsgefahr für die Trennkupplung 5 für den Einzelfall zu bewerten.

## Patentansprüche

1. Kraftfahrzeugantriebsstrang mit einem hydrodynamischen Retarder (17)
1.1 mit einem über einen Antrieb (1) in Umlauf versetzbaren Rotor (2) und einem ortsfesten oder in Gegenrichtung zum Rotor (2) umlaufenden Stator (3), wobei
1.2 der Rotor (2) und der Stator (3) beschaufelte Räder umfassen, die miteinander einen mit Arbeitsmedium befüllbaren Arbeitsraum (4) ausbilden;
1.3 der Antrieb (1) mit einer Trennkupplung (5) versehen ist, mittels welcher der Rotor (2) zu dessen Stilllegung abkoppelbar ist, umfassend eine angetriebene Primärseite (5.1) und eine dem Rotor (2) zugeordnete Sekundärseite (5.2);
1.4 mit einer Steuervorrichtung (6), welche das Öffnen und Schließen der Trennkupplung (5) zum Ein- und Ausschalten des Retarders (17) steuert; **dadurch gekennzeichnet, dass**
1.5 die Steuervorrichtung (6) beim Schließen der Trennkupplung (5) das Hochlaufverhalten der Sekundärseite (5.2) der Trennkupplung (5) und/oder des Rotors (2) über wenigstens einen zugeordneten Sensor (7) erfasst oder das Hochlaufverhalten aus wenigstens einer ihr zugeleiteten Eingangsgröße bestimmt und in Abhängigkeit des Hochlaufverhaltens entweder ein fortgesetztes Schließen der Trennkupplung (5) zur Schlupfüberbrückung zwischen der Primärseite (5.1) und der Sekundärseite (5.2) zur Beschleunigung des Rotors (1) oder ein Abbrechen des Schließvorgangs der Trennkupplung (5) ansteuert.

2. Kraftfahrzeugantriebsstrang gemäß Anspruch 1, **dadurch gekennzeichnet, dass** der wenigstens eine Sensor (7) wenigstens eine der folgenden Größen erfasst und/oder die Steuervorrichtung (6) wenigstens einen Signaleingang aufweist, an welchem wenigstens ein Signal anliegt, das wenigstens eine der nachfolgenden Größen beschreibt:
- die aktuelle Beschleunigung der Sekundärseite (5.2) und/oder des Rotors (2);
- der aktuelle Bremsmomentanstieg des Retarders (17);
- die Drehzahl der Sekundärseite (5.2) und/oder des Rotors (2) oder das Drehmoment des Retarders (17) nach einer vorbestimmten Zeitspanne nach Beginn des Schließens der Trennkupplung (5);
- der Verdrehwinkel der Sekundärseite (5.2) und/oder des Rotors (2) gegenüber einer Winkelstellung zu Beginn des Schließens der Trennkupplung (5) nach einer vorbestimmten Zeitspanne nach Beginn des Schließens der Trennkupplung (5);
- bei einem hydrodynamischen Retarder (17), dessen Rotor (2) beim Übergang vom Bremsbetrieb zum Nicht-Bremsbetrieb vom Stator (3) in Axialrichtung abfahrbar ist, die Axialbeschleunigung des Rotors (2) oder die Axialposition des Rotors (2) nach einer vorbestimmten Zeitspanne nach Beginn des Schließens der Trennkupplung (5).

3. Kraftfahrzeugantriebsstrang nach einem der Ansprüche 1 oder 2, **dadurch gekennzeichnet, dass** die Steuervorrichtung (6) beim Schließen der Trennkupplung (5) ein fortgesetztes Schließen oder ein Abbrechen des Schließvorgangs auch in Abhängigkeit der Drehzahl der Primärseite (5.1) der Trennkupplung (5) oder einer hierzu korrelierenden Größe ansteuert.

4. Kraftfahrzeugantriebsstrang gemäß einem der Ansprüche 1 bis 3, **dadurch gekennzeichnet, dass** in der Steuervorrichtung (6) oder einem anderen Speicher wenigstens ein Grenzwert, eine Kennlinie oder ein Kennfeld hinterlegt ist, mit welchem/welcher die Steuervorrichtung (6) ein Signal des Sensors (7) oder die zugeleitete Eingangsgröße oder eine aus einem Signal des Sensors (7) oder aus der zugeleiteten Eingangsgröße berechnete Größe vergleicht, und in Abhängigkeit des Ergebnisses dieses Vergleichs das fortgesetzte Schließen der Trennkupplung (5) oder das Abbrechen des Schließvorgangs ansteuert.

5. Kraftfahrzeugantriebsstrang gemäß einem der Ansprüche 1 bis 4, **dadurch gekennzeichnet, dass** die Steuervorrichtung (6) auch ein Befüllen des Arbeitsraumes (4) des Retarders (17) mit Arbeitsmedium steuert, wobei das Befüllen des Arbeitsraumes (4) zum Einschalten des Retarders (17) gleichzeitig mit oder um eine festgesetzte Zeitspanne früher oder später als das Beginnen des Schließens der Trennkupplung (5) erfolgt, und die Steuervorrichtung (6) die Geschwindigkeit des Befüllens des Arbeitsraums (4) in Abhängigkeit des Hochlaufverhaltens der Sekundärseite (5.2) der Trennkupplung (5) oder des Rotors (2) ansteuert.

6. Verfahren zum Steuern des Ein- und Ausschaltens eines hydrodynamischen Retarders (17) in einem Kraftfahrzeugantriebsstrang, wobei der hydrodynamische Retarder einen in Umlauf versetzbaren Rotor (2) und einen ortsfesten oder in Gegenrichtung zum Rotor (2) umlaufenden Stator (3) aufweist, wobei der Rotor (2) und der Stator (3) beschaufelte Räder umfassen, die miteinander einen mit Arbeitsmedium befüllbaren Arbeitsraum (4) ausbilden, und zumindest der Rotor (2) durch Öffnen einer Trennkupplung (5), umfassend eine angetriebene Primärseite (5.1) und eine dem Rotor (2) zugewandte Sekundärseite (5.2), von dem Antrieb (1) abgekuppelt und durch Schließen der Trennkupplung (5) aus dem Stillstand in Umlauf versetzt wird,
**dadurch gekennzeichnet, dass**
beim Schließen der Trennkupplung (5) das Hochlaufverhalten der Sekundärseite (5.2) der Trennkupplung (5) und/oder des Rotors (2) zumindest mittelbar erfasst wird und in Abhängigkeit des erfassten Hochlaufverhaltens entweder das Schließen der Trennkupplung (5) zum Beschleunigen des Rotors (2) fortgesetzt wird oder der Schließvorgang der Trennkupplung (5) abgebrochen wird.

7. Verfahren gemäß Anspruch 6, **dadurch gekennzeichnet, dass** das Hochlaufverhalten der Sekundärseite (5.2) der Trennkupplung (5) und/oder des Rotors (2) des Retarders (17) durch Erfassen oder Berechnen wenigstens einer der nachfolgenden Größen erfasst wird:
die aktuelle Beschleunigung der Sekundärseite (5.2) und/oder des Rotors (2);
- der aktuelle Bremsmomentanstieg des Retarders (17);
- die Drehzahl der Sekundärseite (5.2) und/oder des Rotors (2) oder das Drehmoment des Retarders (17) nach einer vorbestimmten Zeitspanne nach Beginn des Schließens der Trennkupplung (5);
- der Verdrehwinkel der Sekundärseite (5.2) und/oder des Rotors (2) gegenüber einer Winkelstellung zu Beginn des Schließens der Trennkupplung (5) nach einer vorbestimmten Zeitspanne nach Beginn des Schließens der Trennkupplung (5);
- bei einem hydrodynamischen Retarder (17), dessen Rotor (2) beim Übergang vom Bremsbetrieb zum Nicht-Bremsbetrieb vom Stator (3) in Axialrichtung abfahrbar ist, die Axialbeschleunigung des Rotors (2) oder die Axialposition des Rotors (2) nach einer vorbestimmten Zeitspanne nach Beginn des Schließens der Trennkupplung (5).

8. Verfahren gemäß einem der Ansprüche 6 oder 7, **dadurch gekennzeichnet, dass** ferner die Drehzahl der Primärseite (5.1) der Trennkupplung (5) oder eine damit korrelierende Größe erfasst oder berechnet wird und das Fortsetzen des Schließens der Trennkupplung (5) oder das Abbrechen des Schließvorgangs der Trennkupplung (5) in Anhängigkeit der Drehzahl oder der korrelierenden Größe durchgeführt wird.

9. Verfahren gemäß einem der Ansprüche 6 bis 8, **dadurch gekennzeichnet, dass** eine erfasste oder berechnete, das aktuelle Hochlaufverhalten der Sekundärseite (5.2) der Trennkupplung (5) oder des Rotors (2) beschreibende Größe mit einem hinterlegten Grenzwert, einer hinterlegten Kennlinie oder einem hinterlegten Kennfeld verglichen wird und in Abhängigkeit des Ergebnisses dieses Vergleichs das Schließen der Trennkupplung (5) fortgesetzt oder der Schließvorgang abgebrochen wird.

10. Verfahren gemäß einem der Ansprüche 6 bis 9, **dadurch gekennzeichnet, dass** mit dem Beginn des Schließens der Trennkupplung (5) auch gleichzeitig oder um eine vorgegebene Zeitspanne versetzt eine Befüllung des Arbeitsraums (4) des Retarders (17) begonnen wird, und die Geschwindigkeit des Befüllens in Abhängigkeit des erfassten Hochlaufverhaltens eingestellt oder variiert wird.

## Claims

1. Motor vehicle drive train with a hydrodynamic retarder (17),
1.1 having a rotor (2) which can be brought into rotation via a drive unit (1) and a fixed stator (3) or a stator (3) rotating in opposite direction to the rotor (2), whereas
1.2 the rotor (2) and the stator (3) comprise bladed wheels, which form together a working chamber (4) which can be filled with working medium;
1.3 the drive unit (1) is provided with a separating clutch (5), by means of which the rotor (2) can be disconnected for its immobilisation, comprising a driven primary side (5.1) and a secondary side (5.2) associated with the rotor (2);
1.4 having a control device (6) which controls the opening and closing of the separating clutch (5) for switching the retarder (17) on and off; **characterised in that**
1.5 the control device (6) when closing the separating clutch (5) detects the run-up behaviour of the secondary side (5.2) of the separating clutch (5) and/or of the rotor (2) via at least one associated sensor (7) or defines the run-up behaviour from at least one input value supplied thereto and according to the run-up behaviour initiates either the continuous closing of the separating clutch (5) for slip bridging between the primary side (5.1) and the secondary side (5.2) for accelerating the rotor (1) or the interruption of the closing process of the separating clutch (5).

2. Motor vehicle drive train according to claim 1, **characterised in that** said at least one sensor (7) detects at least one of the following variables and/or the control device (6) includes at least one signal input, to which at least one signal is applied, which describes said at least one of the following variables:
the current acceleration of the secondary side (5.2) and/or of the rotor (2);
the current braking torque increase of the retarder (17);
- the rotational speed of the secondary side (5.2) and/or of the rotor (2) or the rotation torque of the retarder (17) after a preset period of time after starting to close the separating clutch (5);
- the twist angle of the secondary side (5.2) and/or of the rotor (2) with respect to an angular position when starting to close the separating clutch (5) after a preset period of time after starting to close the separating clutch (5);
- with a hydrodynamic retarder (17), whose rotor (2) is disconnectable from the stator (3) in the axial direction when passing from the braking operation to the non-braking operation, the axial acceleration of the rotor (2) or the axial position of the rotor (2) after a preset period of time after starting to close the separating clutch (5).

3. Motor vehicle drive train according to one of claims 1 or 2, **characterised in that** the control device (6) when closing the separating clutch (5) initiates the continuous closing or the interruption of the closing process or as a function of the rotational speed of the primary side (5.1) of the separating clutch (5) or according to a variable correlated thereto.

4. Motor vehicle drive train according to one of claims 1 to 3, **characterised in that** at least one limit value, one characteristic curve or one characteristic field is deposited in the control device (6) or another memory, with which the control device (6) compares the signal of the sensor (7) or the supplied input value or a value calculated from the signal of the sensor (7) or from the supplied input value, and according to the result of this comparison initiates the continuous closing of the separating clutch (5) or the interruption of the closing process.

5. Motor vehicle drive train according to one of claims 1 to 4, **characterised in that** the control device (6) also controls the filling of the working chamber (4) of the retarder (17) with working medium whereas the working chamber (4) for switching on the retarder (7) is being filled simultaneously with the closing of the separating clutch (5) or a set period of time earlier or later than the beginning of the closing of said separating clutch (5, and the control device (6) controls the filling speed of the working chamber (4) according to the run-up behaviour of the secondary side (5.2) of the separating clutch (5) or of the rotor (2).

6. A method for controlling the switching on and off of a hydrodynamic retarder (17) in a motor vehicle drive train, whereby the hydrodynamic retarder includes a rotor (2) which can be brought into rotation and a fixed stator (3) or a stator (3) rotating in opposite direction to the rotor (2), whereas the rotor (2) and the stator (3) comprise bladed wheels, which form together a working chamber (4) which can be filled with working medium, and at least the rotor (2) is disconnected from the drive unit (1) by opening a separating clutch (5), comprising a driven primary side (5.1) and a secondary side (5.2) facing the rotor (2), and is brought into rotation from standstill by closing the separating clutch (5),
**characterised in that**
when closing the separating clutch (5) the run-up behaviour of the secondary side (5.2) of the separating clutch (5) and/or of the rotor (2) is detected, at least indirectly, and according to the detected run-up behaviour either the closing of the separating clutch (5) is continued for accelerating the rotor (2) or the closing process of the separating clutch (5) is interrupted.

7. A method according to claim 6, **characterised in that** the run-up behaviour of the secondary side (5.2) of the separating clutch (5) and/or of the rotor (2) of the retarder (17) is detected by calculating or detecting at least of the following variables:
- the current acceleration of the secondary side (5.2) and/or of the rotor (2);
- the current braking torque increase of the retarder (17);
- the rotational speed of the secondary side (5.2) and/or of the rotor (2) or the rotation torque of the retarder (17) after a preset period of time after starting to close the separating clutch (5);
- the twist angle of the secondary side (5.2) and/or of the rotor (2) with respect to an angular position when starting to close the separating clutch (5) after a preset period of time after starting to close the separating clutch (5);
- with a hydrodynamic retarder (17), whose rotor (2) is disconnectable from the stator (3) in the axial direction when passing from the braking operation to the non-braking operation, the axial acceleration of the rotor (2) or the axial position of the rotor (2) after a preset period of time after starting to close the separating clutch (5).

8. A method according to one of the claims 6 or 7, **characterised in that** moreover the rotational speed of the primary side (5.1) of the separating clutch (5) or a variable correlated therewith is detected or calculated and the closing of the separating clutch (5) is continued or the closing process of the separating clutch (5) is interrupted according to the rotational speed or the correlating variable.

9. A method according to any of the claims 6 to 8, **characterised in that** a detected or calculated variable, describing the current run-up behaviour of the secondary side (5.2) of the separating clutch (5) or of the rotor (2) is compared with a stored limit value, a stored characteristic curve or a stored characteristic field and according to the result of said comparison the closing of the separating clutch (5) is continued or the closing process is interrupted.

10. A method according to any of the claims 6 to 9, **characterised in that**, that the filling of the working chamber (4) of the retarder (17) is started with the beginning of the closing of the separating clutch (5) also at the same time or offset by a preset period of time, and the filling speed is adjusted or varied according to the detected run-up behaviour.

## Revendications

1. Chaîne cinématique d'automobile avec un retardateur hydrodynamique (17)
1.1 avec un rotor (2) pouvant être mis en rotation par un entraînement (1) et un stator (3) fixe ou tournant en sens inverse du rotor (2), dans laquelle
1.2 le rotor (2) et le stator (3) comportent des roues à aubes qui forment ensemble un espace de travail (4) pouvant être rempli avec du fluide de travail ;
1.3 l'entraînement (1) est muni d'un embrayage séparateur (5) au moyen duquel le rotor (2) peut être débrayé jusqu'à ce qu'il s'immobilise, comprenant un côté primaire entraîné (5.1) et un côté secondaire (5.2) associé au rotor (2) ;
1.4 avec un dispositif de commande (6) qui commande l'ouverture et la fermeture de l'embrayage séparateur (5) pour activer et désactiver le retardateur (17) ; **caractérisée en ce que**
1.5 lors de la fermeture de l'embrayage séparateur (5), le dispositif de commande (6) détecte la montée en régime du côté secondaire (5.2) de l'embrayage séparateur (5) et/ou du rotor (2) à l'aide d'au moins un capteur (7) associé ou détermine le comportement de montée en régime à partir d'au moins une grandeur d'entrée qui lui est transmise et, en fonction du comportement de montée en régime, commande soit la poursuite de la fermeture de l'embrayage séparateur (5) pour surmonter le patinage entre le côté primaire (5.1) et le côté secondaire (5.2) pour accélérer le rotor (1), soit l'interruption de la fermeture de l'embrayage séparateur (5).

2. Chaîne cinématique hydrodynamique (17) selon la revendication 1, **caractérisé en ce que** l'au moins un capteur (7) détecte au moins une des grandeurs suivantes et/ou le dispositif de commande (6) présente au moins une entrée de signal sur laquelle arrive au moins un signal décrivant au moins une des grandeurs suivantes :
- accélération actuelle du côté secondaire (5.2) et/ou du rotor (2) ;
- augmentation actuelle du moment de freinage du retardateur (17) ;
- vitesse de rotation du côté secondaire (5.2) et/ou du rotor (2) ou couple de rotation du retardateur (17) après un intervalle de temps prédéterminé suivant le début de la fermeture de l'embrayage séparateur (5) ;
- angle de rotation du côté secondaire (5.2) et/ou du rotor (2) par rapport à une position angulaire au début de la fermeture de l'embrayage séparateur (5) après un intervalle de temps prédéterminé suivant le début de la fermeture de l'embrayage séparateur (5) ;
- dans un retardateur hydrodynamique (17) dont le rotor (2) peut être écarté du stator (3) dans le sens axial lors de la transition du mode de freinage au mode sans freinage, accélération axiale du rotor (2) ou position axiale du rotor (2) après un intervalle de temps prédéterminé suivant le début de la fermeture de l'embrayage séparateur (5).

3. Chaîne cinématique hydrodynamique (17) selon l'une des revendications 1 ou 2, **caractérisé en ce que** lors de la fermeture de l'embrayage séparateur (5), le dispositif de commande (6) commande la poursuite de la fermeture ou l'interruption de la fermeture en fonction aussi de la vitesse de rotation du côté primaire (5.1) de l'embrayage séparateur (5) ou d'une grandeur corrélée à celle-ci.

4. Chaîne cinématique hydrodynamique (17) selon l'une des revendications 1 à 3, **caractérisé en ce qu'**une valeur limite, une courbe caractéristique ou un champ caractéristique est enregistré(e) dans le dispositif de commande (6), avec laquelle ou lequel le dispositif de commande (6) compare le signal du capteur (7) ou la grandeur d'entrée transmise ou une grandeur calculée à partir du signal du capteur (7) ou à partir de la grandeur d'entrée transmise et commande, en fonction du résultat de cette comparaison, la poursuite de la fermeture de l'embrayage séparateur (5) ou l'interruption de l'opération de fermeture.

5. Chaîne cinématique hydrodynamique (17) selon l'une des revendications 1 à 4, **caractérisé en ce que** le dispositif de commande (6) commande aussi un remplissage de l'espace de travail (4) du retardateur (17) avec du fluide de travail, le remplissage de l'espace de travail (4) pour démarrer le retardateur (17) ayant lieu en même temps ou avec un temps d'avance ou de retard fixé par rapport au début de la fermeture de l'embrayage séparateur (5), et le dispositif de commande (6) commande la vitesse du remplissage de l'espace de travail (4) en fonction du comportement de montée en régime du côté secondaire (5.2) de l'embrayage séparateur (5) ou du rotor (2).

6. Procédé pour commander l'activation et la désactivation d'un retardateur hydrodynamique (17) d'une chaîne cinématique d'automobile, qui comporte un rotor (2) pouvant être mis en rotation et un stator (3) fixe ou tournant en sens inverse du rotor (2), le rotor (2) et le stator (3) comportant des roues à aubes qui forment ensemble un espace de travail (4) pouvant être rempli avec du fluide de travail, et dans lequel au moins le rotor (2) peut être découplé de l'entraînement (1) par l'ouverture d'un embrayage séparateur (5) comprenant un côté primaire entraîné (5.1) et un côté secondaire (5.2) tourné vers le rotor (2) et mis en rotation en partant de l'arrêt par la fermeture de l'embrayage séparateur (5), **caractérisé en ce que** lors de la fermeture de l'embrayage séparateur (5), le comportement de montée en régime du côté secondaire (5.2) de l'embrayage séparateur (5) et/ou du rotor (2) est détecté au moins indirectement et, en fonction du comportement de montée en régime détecté, la fermeture de l'embrayage séparateur (5) est poursuivie pour accélérer le rotor (2) ou l'opération de fermeture de l'embrayage séparateur (5) est interrompue.

7. Procédé selon la revendication 6, **caractérisé en ce que** le comportement de montée en régime du côté secondaire (5.2) de l'embrayage séparateur (5) et/ou du rotor (2) du retardateur (17) est détecté par la détection ou le calcul d'au moins une des grandeurs suivantes :
- accélération actuelle du côté secondaire (5.2) et/ou du rotor (2) ;
- augmentation actuelle du moment de freinage du retardateur (17) ;
- vitesse de rotation du côté secondaire (5.2) et/ou du rotor (2) ou couple de rotation du retardateur (17) après un intervalle de temps prédéterminé suivant le début de la fermeture de l'embrayage séparateur (5) ;
- angle de rotation du côté secondaire (5.2) et/ou du rotor (2) par rapport à une position angulaire au début de la fermeture de l'embrayage séparateur (5) après un intervalle de temps prédéterminé suivant le début de la fermeture de l'embrayage séparateur (5) ;
- dans un retardateur hydrodynamique (17) dont le rotor (2) peut être écarté du stator (3) dans le sens axial lors de la transition du mode de freinage au mode sans freinage, accélération axiale du rotor (2) ou position axiale du rotor (2) après un intervalle de temps prédéterminé suivant le début de la fermeture de l'embrayage séparateur (5).

8. Procédé selon l'une des revendications 6 ou 7, **caractérisé en ce que** la vitesse de rotation du côté primaire (5.1) de l'embrayage séparateur (5) ou une grandeur corrélée à celle-ci est en outre détectée ou calculée et la poursuite de la fermeture de l'embrayage séparateur (5) ou l'interruption de l'opération de fermeture de l'embrayage séparateur (5) est effectuée en fonction de la vitesse de rotation ou de la grandeur corrélée.

9. Procédé selon l'une des revendications 6 à 8, **caractérisé en ce que** la grandeur détectée ou calculée décrivant le comportement de montée en régime actuel du côté secondaire (5.2) de l'embrayage séparateur (5) ou du rotor (2) est comparée à une valeur limite en mémoire, à une courbe caractéristique en mémoire ou à un champ caractéristique en mémoire et, en fonction du résultat de cette comparaison, la fermeture de l'embrayage séparateur (5) est poursuivie ou l'opération de fermeture est interrompue.

10. Procédé selon l'une des revendications 6 à 9, **caractérisé en ce qu'**au début de la fermeture de l'embrayage séparateur (5), un remplissage de l'espace de travail (4) du retardateur (17) commence en même temps ou avec un décalage prédéterminé dans le temps, et la vitesse du remplissage est réglée ou modifiée en fonction du comportement de montée en régime détecté.
